# EUROPEAN PATENT SPECIFICATION

(11) **EP 2 605 158 B1**
(45) Date of publication and mention of the grant of the patent: **02.01.2019**
(21) Application number: 12007673.2
(22) Date of filing: 13.11.2012
(51) Int. Cl.: G06F 17/30

(54) **Mixed join of row and column database tables in native orientation**
Gemischte Verbindung von Zeilen- und Spaltendatenbanktabellen bei nativer Ausrichtung
Jointure mixte de tables de base de données à rangées et colonnes dans une orientation native

(30) Priority: 12.12.2011 US 201113323530
(43) Date of publication of application: 19.06.2013
(73) Proprietor: SAP SE, 69190 Walldorf (DE)
(72) Inventor: Yoon, Yongsik, 69190 Walldorf (DE); Jeong, Chanho, 69190 Walldorf (DE); Cha, Sang Kyun, 69190 Walldorf (DE)
(74) Representative: Müller-Boré & Partner Patentanwälte PartG mbB

(56) References cited:
- US-A1- 2011 231 389
- US-A1- 2011 264 667
- Daniel J. Abadi: "Query Execution in Column-Oriented Database Systems", , 29 February 2008 (2008-02-29), XP055003471, Retrieved from the Internet: URL:http://cs-www.cs.yale.edu/homes/dna/pa pers/abadiphd.pdf [retrieved on 2011-07-25]

## Description

### TECHNICAL FIELD

The present invention relates to storage of data in databases, and in particular, to processing a database query.

Document US 2011/0314027 A1 discloses an index building, querying method, device and system for distributed columnar database. The index building method includes: obtaining a column field from a distributed columnar database, generating a column index file in which the column field is a key word, the column index file comprising the mapping relationship between the value of the column field in the distributed columnar database and the corresponding row field value, storing the column index file to a index catalogue corresponding to the column field in the distributed columnar database.

Document US 2011/0231389 A1 discloses an architecture that provides for greater interoperability between column stores and row stores by leveraging the advantages both have to offer. The architecture operates automatically (e.g., dynamically) to move between row oriented processing mode and batch processing mode, and the combination thereof, when it is more beneficial to run in one mode relative to the other mode, or both modes. The auto-switching of data processing between batch and row oriented mode occurs during the execution of a single query. The architecture can automatically modify an operator in the query tree and/or remove an operator if desired at runtime for more efficient processing. This approach also accounts for memory constraints for either of row or column processing.

### SUMMARY

A mixed join between database column and row tables employs an algorithm that recognizes both row store tables (also referred to as row tables) and column store tables (also referred to as column tables), and is executable upon the data in its native form (row oriented storage or column oriented storage) without requiring conversion between orientations. In other words, creating a join table from a row store table and a column store table in a native state (i.e. performing a native mixed join) may be understood as creating the join table without converting row store table data into column store format and without converting column store table data into row store format (i.e. conversion-free). The native mixed join algorithm may access a column dictionary of a record (also referred to as a column store dictionary of the record) of the column table for efficient join processing. The native mixed join algorithm may also exploit an inverted index (if present) to search for a row in a column of the column store table with a given value. In particular, the native mixed join algorithm refers to the column dictionary for a join condition, while iterating the row table and returning matched records in a pipelined manner.

The following may be understood to relate to a method for carrying out a join of a column store table and a row store table, i.e. to carrying out a mixed join.

According to an embodiment, a computer implemented method for processing a query of a database is provided. The database may comprise a row store table and a column store table. The method may comprise determining that the query specifies a join condition, a first join column of the row store table, and a second join column of the column store table, wherein the second join column references (i.e. identifies or specifies) a first column store record of the column store table. The method may further comprise extracting a first row store record from the row store table, the first row store record including a first row store value and being identified by a first row store record identifier. The method may further comprise determining a first column store entry of the first column store record. The first column store entry may comprise a first column store value identifier identifying a first
column store value. Alternatively, the first column store entry may comprise the first column store value. When the first column store value matches the first row store value according to the join condition, the method may further comprise projecting the first column store entry in a projected column, determining a projected column row identifier that identifies the a row of the projected column, and providing the first row store record identifier and the projected column row identifier in a result table.

In some cases multiple row store records may be extracted from the row store table. For each extracted row store record, records (i.e. columns) of the column store table may be searched. In particular, records of the column store table identified by each join condition may be searched. More particularly, the column dictionaries of the records of the column store table identified by each join condition may be searched. Each column store value (e.g. a value in a column dictionary) matching an extracted row store value according to the join condition may be projected in a projected column (i.e. placed in or copied to the projected column). A projected column may be created for each join column from the row table specified in the query. The result table may be a combination of row identifiers from the row table and row identifiers from the table of projected columns.

The method may further comprise accessing (i.e. referencing or referring to) an identifier map mapping column store record indexes of the first column store record to column store entries (e.g. column store value identifiers) of the first column store record, each column store record index identifying a location of a column store entry in the first column store record. The method may also comprise determining, by means of the accessing, a first column store record index that identifies a location (i.e. index or placement) of the first column store entry in the first column store record.

Advantageously, use of the identifier map may enhance performance, since it may be faster than scanning the entire column store record.

In some cases, the method comprises determining that the query specifies a right outer join. Accordingly, the method may further comprise creating a matched flag vector mapping each column store value identifier to a corresponding boolean value, the boolean value indicating whether the column store value of the corresponding column store value identifier matches any row store value in the first join column. When a boolean value of the matched flag vector indicates that a third column store value identified by a third column store value identifier does not match any row store value in the first join column according to the join condition, the method may further comprise determining (e.g. by referencing an identifier map or by scanning the first column store record) a third column store record index that identifies a location of the third column store entry in the first column store record, the third column store entry comprising the third column store value identifier; wherein the projecting further comprises projecting the third column store entry in the projected column. The method may further comprise processing the result table in order to create a right outer join table, the processing including inserting the third column store value and a corresponding NULL value into the right outer join table, the corresponding NULL value indicating that the third column store value does not match any row store value in the first join column according to the join condition.

The matched flag vector may be implemented as an array of boolean values, each boolean value being indexed by a column store value identifier. In other words, the appearance of a boolean value at a particular position in the matched flag vector may indicate whether the column store value indexing the particular position matches a (or any) row store value in the first join column.

The right outer join table may include all the values of the result table. In addition, the right outer join table may include values from the matched flag vector(s) matching the join condition.

Similarly, a left outer join table may include all the values of the result table. In addition, the left outer join table may include values from the row store table matching the join condition with no matching column store table value (i.e. row store table values mapped to an invalid column store table value).

In some cases the method may comprise determining that the first join column has duplicate values. Accordingly, the method may further comprise maintaining a hash table mapping row store values with column store values, column store value identifiers and column store record indexes by means of a hash function. Determining the first column store entry of the first column store record further comprising inserting the following into the hash table:
- the first row store value, the first row store value mapped to a first associated column data;
- the first associated column data comprising:
   -- a hash function output of the hash function when the hash function is given the row store value as input;
   -- the first row store value;
   -- the first column store value identifier; and
      -- a first column store record index that identifies a location of the first column store entry in the first column store record.

The plurality of row store records may include a third row store record, the third row store record being identified by a third row store record identifier. The method may further comprise identifying a third row store value of the third row store record, the third row store value being in the first join column. The method may further comprise determining a third column store entry of the third column store record, the third column store entry comprising a third column store value identifier. The third column store record may have a corresponding column dictionary. The method may further comprise checking the hash table to determine if the third row store value is in the hash table. Also, when the third row store value is in the hash table, the method may comprise determining the third column store value identifier by accessing column data associated with the third row store value. When the third row store value is not in the hash table, the method may comprise determining the third column store value identifier by referencing the column dictionary corresponding to the third column store record.

According to the invention there is provided a method according to claim 1, a computer program product according to claim 8, and a computer system according to claim 9.

Advantageous embodiments are recited in the remaining claims.

The following detailed description and accompanying drawings provide a better understanding of the nature and advantages of the present invention.

### BRIEF DESCRIPTION OF THE DRAWINGS

Figure 1 shows a highly simplified schematic view of a mixed join according to an embodiment.
Figure 2 shows a simplified schematic view of one embodiment of a foreign key mixed join.
Figure 3 shows a database to be queried according to an example.
Figure 3A is a flow diagram showing steps according to an embodiment of a mixed join algorithm.
Figures 3B-3I are simplified schematic views of various steps of the native mixed join algorithm.
Figure 4 shows a simplified schematic view of one embodiment of an N-to-M mixed join.
Figure 5 plots relative elapsed time versus cardinality ratio, for both a native mixed join and a conversion-based mixed join.
Figure 6 illustrates hardware of a special purpose computing machine configured to implement a native mixed join according to an embodiment.
Figure 7 shows an example of a computer system.
Figure 8 shows a simplified physical representation of a column in a dictionary-encoded column table.

### DETAILED DESCRIPTION

In the following description, for purposes of explanation, examples and specific details are set forth in order to provide a thorough understanding of various embodiments. It will be evident, however, to one skilled in the art that the present invention as defined by the claims may include some or all of the features in these examples alone or in combination with other features described below, and may further include modifications and equivalents of the features and concepts described herein.

A database is an electronic filing system that stores data in a structured way. The database may be created in an application level language. For example, the database may be created via a series of Structured Query Language (SQL) statements. Alternatively, the database may be created using any conventional technique. The primary storage structure in a database is a table. A database may contain multiple tables and each table may hold information of a specific type. Database tables store and organize data in horizontal rows and vertical columns. Rows typically correspond to real-world entities or relationships that represent individual records in a table. Columns may denote specific attributes of those entities or relationships, such as "name," "address" or "phone number." For example, Company X may have a database containing a "customer" table listing the names, addresses and phone numbers of its customers. Each row may represent a single customer and the columns may represent each customer's name, address and phone number.

Databases are generally stored in computer memory that is one-dimensional. Two-dimensional database tables must therefore be mapped onto a one-dimensional data structure (e.g. one dimensional strings) to be stored within a database. One mapping approach involves storing a table in a database row-by-row (i.e., a row-oriented or row-formatted storage model). Rows or sections of rows may be stored. Advantageously, a single disk write suffices to push all of the cells (or entries) of a single row out to disk. This approach keeps information about a single entity together. For example, row-by-row storage may store all information about a first customer first, then all information about a second customer and so on.

Alternatively, a table may be stored in a database column-by-column (i.e., a column-oriented or column-formatted storage model). Columns or sections of columns may be stored. This approach keeps like attributes of different entities together. In other words, the values for each single column (or attribute) are stored contiguously. For example, column-by-column storage may store all customer names first, then all customer addresses and so on. Column-by-column storage is also referred to as vertical storage or storing tables column-wise.

Conventionally, data must be accessed from a table in the same manner that it was stored. That is, conventional computer storage techniques require dedicated query operators that can access specific types of storage models. For example, row query operators are used to process data stored in a database in row-formatted storage models and column query operators are used to process data stored in column-formatted storage models. Choosing which storage model to use thus often depends on how data will be used. Row-oriented storage models may be write-optimized and are commonly well-suited for transactional queries (i.e. online transaction processing - OLTP), while column-oriented storage models may be read-optimized and are generally well-suited for analytical queries (i.e. online analytical processing - OLAP). Accordingly, conventional query processing schemes are tightly bound to the underlying storage model of the database being queried.

A row store table may refer to a table stored according to the row-oriented storage model. The row store table may also be referred to as a row table. A column store table may refer to a table stored according to the column-oriented storage model. The column store table may also be referred to as a column table. The term "record" may refer to a stored row (i.e. tuple) when used in connection with a row store table. When used in connection with a column store table, "record" may refer to a stored column (i.e. a column of a relation or entries described by an attribute of the relation). The record may be implemented as consecutive bytes on a disk block. The record may consist of multiple cells. The contents of a cell are generally referred to as an entry. An entry may be a value (e.g. the string "Johnson") or a value identifier (e.g. the integer "5"). Each record in a row store table and/or a column store table may be identified by a corresponding record identifier. The term record may be understood as discussed in "Database Systems The Complete Book", H. Molina et al., 2 ed., 2009.

A column engine may refer to a column-oriented database management system (DBMS), i.e. a DBMS that processes data tables stored as columns or sections of columns. A row engine may refer to a row-oriented DBMS, i.e. a DBMS that processes data tables stored as rows or sections of rows. A database may include a plurality of database management systems. The column engine and the row engine may be part of the same DBMS or part of different database management systems.

A column dictionary (i.e. column store dictionary) may be used to reduce memory consumption by encoding records of a corresponding column store table. Thus, the column dictionary may be used to compress the column store table. The column dictionary may map column table values (e.g. values of an employee table may include employee data such as names, phone numbers and addresses) to value identifiers (e.g. integers). The value identifiers may be stored directly in the column table, i.e. in each entry in the column table may contain a column table value identifier.

In some cases, a database having certain data stored in a column-formatted storage model may be asked to handle a transactional query relating to that data or a database having certain data stored in a row-formatted storage model may be asked to handle an analytical query relating to that data. For example, a database having data stored in a row-formatted storage model may receive a mixed set of queries requiring transactional and analytical processing of that data.

Thus, in some cases, it may be desirable to process a query to a database without changing the format of the database storage model of the data being processed, i.e. without changing row store data to column store data and without changing column store data to row store data.

In responding to such a mixed set of queries, a query engine may seek to perform a mixed join operation. Mixed join operations may be understood as described in U.S. Patent Application No. 12/982,673 entitled "Processing Database Queries Using Format Conversion", filed December 30, 2010. U.S. Patent Application No. 12/982,673 describes performing a mixed join indirectly in a conversion-based way. According to certain embodiments of this approach, row table data is converted into column format and then the join is performed in the column engine, or column table data is converted into row format and then the join is performed in the row engine.

However, conversion overhead for mixed join is usually not trivial from the perspective of performance and memory consumption. Therefore, it may not be desirable to use conversion-based mixed join queries in situations involving performance critical workload. Accordingly, the present disclosure addresses this and other issues with systems and methods for implementing a conversion-free native mixed join function.

Described herein are techniques for performance optimization of a mixed join operation between column and row tables in a database. The column and row tables may be processed in a native state, i.e. conversion of row tables to column store format or of column tables to row store format is unnecessary. In particular, said conversion is unnecessary because queries are processed using knowledge of the structures of the column store table and the row store table to find entries in the column store table matching entries in the row store table.

According to an embodiment, a mixed join between database column and row tables employs an algorithm that is aware of both row store tables and column store tables, and is directly executable upon the data in its native form without requiring conversion between orientations. A column store table may have a column dictionary. In particular, a column store table may have a corresponding column dictionary for each column. The corresponding column dictionary for a column may map value identifiers appearing in the column to the values identified by the value identifiers. Optionally, the dictionary has an identifier map (also referred to as an inverted index) to search for a column store record index (docid or doc_id) with given value identifier (vid). The column store record index may be implemented as a number that identifies the position of a column store entry in a column store record relative to the other entries in the column store record.

The native mixed join algorithm exploits a column dictionary and an identifier map for efficient join processing. In particular, the native mixed join algorithm looks in a column dictionary for values matching a join condition, and returns matched records in a pipelined manner. In other words, matched records may be searched for and returned in parallel. In one example, the pipelined manner may be similar to "Volcano-style pipelining", as discussed in "MonetDB/X100: Hyper-Pipelining Query Execution" by Peter Boncz et al, 2005.

The query may include at least one join condition. The join condition may be understood as a join predicate, e.g. a boolean factor relating a value from the row table and a value from the column table. The join condition may be a sargable predicate, i.e. "column comparison-operator-value", as defined in "Access Path Selection in a Relational Database Management System", Selinger et al., 1979.

Columns referenced in the join condition are called join columns. Thus, a join column is a column of a table accessed in order to process a query including the join condition. The join column can be specified via an attribute, e.g. in the join condition. The join condition may be explicitly specified, e.g. using the SQL JOIN keyword, or implicitly specified, e.g. by specifying multiple tables in a FROM clause and specifying a join condition (or conditions) in a WHERE clause. Other mechanisms, possibly in other query languages, may be used. Also, when a cell, value or value identifier is referred to as being in a join column this may be interpreted to mean that the cell, value or value identifier is in a column (i.e. a column of the row store table or a record of the column store table) referenced by the join column. In other words, the join column specified in a query may be understood as an identifier used to access a column in a database.

The join condition may explicitly specified in the query, optionally by means of an ON keyword in the query. Alternatively, the join condition may be implicitly specified in the query, optionally by means of a WHERE clause of the query referring to the first join column and the second join column.

The query may be drafted and submitted by a user through a query program (the program may include a query interface) or other software application located within memory of a computer and providing a user interface for display to a user. Query programs may be limited to specific types of retrieval, such as displaying a customer account, or may employ a general-purpose query language that allows any condition to be searched. In some cases, the query may be selected by the user from a list. Predefining queries in such a list may have the benefit that the database can be optimized to process the query. For example, identifier maps may be created for columns (i.e. records) in the column store table referenced (i.e. identified) by join columns of the query.

In some implementations, the DBMS may provide a query language, such as Structured Query Language (SQL), that allows users to interactively interrogate the database. User interactions may involve typing in simple commands, using a predefined query menu or a query by example (QBE) functionality. Query programs may also include logical information requirements that users must satisfy before submitting a query. For example, the query program may require users to include in the query specific selection criteria and/or define what attributes are to be displayed as output.

The query language may include without limitation any simplified computer language used to select records from a database. Although the examples refer to SQL, other languages may be used. The database may be a relational database, an object relational database or another form of database capable of storing a row store table and a column store table. The database may include further databases, e.g. a row store (sub) database and a column store (sub) database may be considered parts of the database.

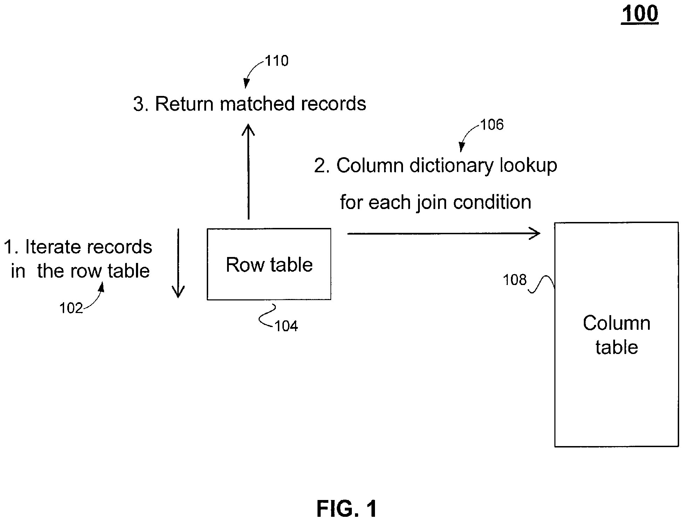

Figure 1 shows a generic view of the functioning of a mixed join algorithm 100 according to an embodiment. Individual steps from this embodiment may be performed in combination with steps from other embodiments. In this case a column dictionary is used in order to improve performance. However, performance of the mixed join without the column dictionary is also possible.

In a first step 102, records are iterated in the row table 104. Iterating records may include obtaining (i.e. fetching, extracting or copying) a plurality of records from the row table 104.

A cell in the row store table may include a row store value. In other words, a row store value may be stored in a cell of a record from the row store table.

A cell in the column store table may include a column store entry. In other words, a column store entry may be stored in a cell of the column store table. The column store entry may comprise (or consist of) a column store value identifier (i.e. a value identifier). The column store value identifier may be used in conjunction with a column dictionary to determine the column store value corresponding to the column store value identifier. Alternatively, the column store entry may comprise a column store value.

A second step 106 involves column dictionary lookup in the column table 108 for each join condition. In particular, matching a row store value to a column store entry includes looking up the row store value in the column dictionary in order to find a column store value equal to the row store value. Moreover, determining that the column store value matches the row store value may comprise comparing the column store value to the column store value according to the join condition.

If a column store value matching the row store value is found in the column dictionary, then the column dictionary lookup can determine a value identifier corresponding to the column store value (i.e. the value identifier mapped to the column store value, e.g. by being in the same row or tuple as the column store value). The column dictionary may map values to value identifiers stored in the column store table.

In the third step 110, a result table including matched records from the row store table and matched records (or parts of records) from the column store table may be returned. The result table may be used to create a join table that is the final result of processing the query. For example, the join table may be created by using the result table as a basis for sorting, grouping, or other further processing; alternatively, the pointers in the result table may be directly used to create the join table without further processing.

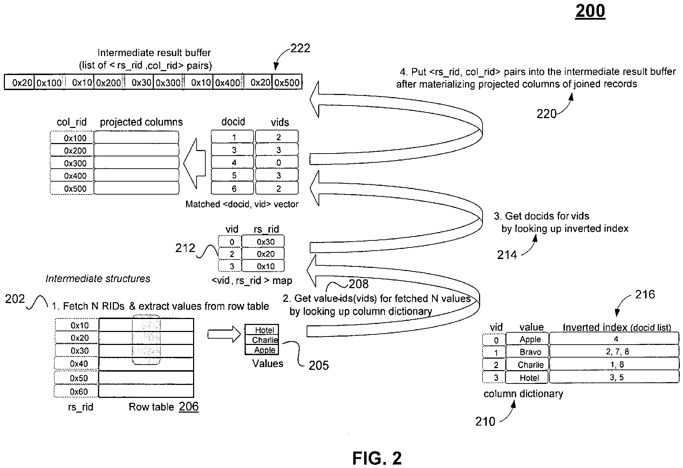

**Figure** 2 presents details of a mixed join, more particularly, a foreign key mixed join (1-to-N) algorithm, in the case where an identifier map 216 is present and available. The foreign key mixed join may be understood as a type of inner join. In "1-to-N" the "1" refers to 1 record from a row store table and the "N" refers to an arbitrary number of rows of a column store table. Thus, a 1-to-N join may attempt to match each row of the row store table with all the rows of the column store table. For the foreign-key (FK) mixed join, it can be assumed that join columns of the row table do not have duplicate values. Therefore, a column dictionary 210 of a join column from the column store table can be accessed for each value in fetched row table records without a performance disadvantage.

Although the examples refer to a first join column and a second join column, it should be understood that further join columns may be specified in the query.

According to a first step 202 of the FK mixed join algorithm 200, N records are fetched (i.e. extracted or copied) from the row table 206. N may be an arbitrary number, for example, less than 1000, less than 5000, less than 10,000, or less than 20,000. The N records may have a first join column (highlighted in the row table 206 of Figure 2). The first join column may extend through the entire row table. A set of values 205 in the first join column of the N records may be extracted, e.g. to form an array of string values. In the example, the set of values 205 consists of Hotel, Charlie, and Apple. The set of values 205 may include a first row store value and a second row store value. The first and second row store values may be in a column of the row store table referenced (i.e. identified or specified) by the first join column. Further sets of values may be extracted from the row table until all the values in every join column have been extracted.

In a second step 208, the column dictionary 210 may be referenced to obtain the column store value identifiers (vids) for each value in the set of values 205. A column store value identifier may be referred to as a value identifier, a column dictionary value identifier or a dict_vid. According to an example, there may be a column dictionary for every column in the column store table. Each column dictionary may be searched for each value in the set of values 205 according to the join condition. Moreover, each column table entry with a value identifier mapped to a value matching the join condition determined.

A first column store value identifier may identify a first column store value. Thus, according to an example, if the join condition relates the first row store value to the first column store value via an equality ("=") then the first row store value matches the first column store value when the first row store value equals the first column store value.

From the value identifiers and row store record identifiers (rs_rids), intermediate structures may be created for later use. An intermediate structure may be a table, e.g. a materialized view. For example, Figure 2 shows a mapping 212 (<vid, rs_rid>) of each value identifier (vid, also value-id) of the column dictionary to the corresponding row store record identifier (rs_rid) from the row table. The row store record identifier may also be referred to as a row store identifier or a row store id. Each record of the row store table may be identified (i.e. designated, or distinguished from other records of the row store table) by the row store record identifier of that row. A row store record identifier may be implemented as a pointer or form of record metadata or other means enabling access to the corresponding row store record.

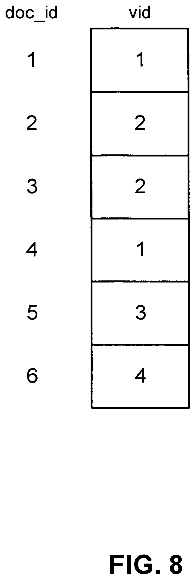

In a third step 214, document identifiers (docids) of a join column of the column table may be obtained from the value-ids by referencing the identifier map 216 (also referred to as an inverted index). The docids may be understood as indexes into a column store record referenced (i.e. identified) by the join column of the column table. Put another way, docids refer to rows of the column store table. Column store record indexes (docids) are discussed in more detail in connection with Figure 8. Each column store record referenced by a join column may have a distinct identifier map including the indexes of each value identifier in that column store record. In some cases, every column store record may have a corresponding identifier map. Alternatively, implementations without any identifier map are possible. Variations in which some number of column store records have corresponding identifier maps are also possible.

In one example, each column store record index (docid) may be implemented as an integer, such that each integer identifies a row in the column store table. Thus, as described in connection with figure 8, docids may be used to index a column (or record) in the column store table. Other ways of identifying rows in the column store table are also possible. Accordingly, used-columns of matched column table records . Used-columns of matched column table records (i.e. values of column table records matching the join condition) can be projected (i.e. materialized). Projecting columns of a matched column table record may involve materializing (making a copy in memory) of a subset of the values in the column table record (e.g. column store values determined to match a row store value according to the join condition). A table including materialized used-columns may include the cells of the used-columns (i.e. projected columns in Figure 2) and identifiers of (e.g. pointers to) the rows of the projected columns (col_rids). Other means enabling rows of the projected columns to be accessed (i.e. referenced) are also possible.

A reason for materializing used-columns of matched column table records (identified as "projected columns" in Figure 2), is to avoid retrieving values from the column dictionary for every column access of parent query operators.

In general, a query operator provides instructions as to how the query should be processed. The query may include one or more query operators. Exemplary query operators include SELECT to identify rows in a table, PROJECT to identify attributes in a table, JOIN to combine relations within one or more tables, AGGREGATE to return a single value for a set of retrieved rows of a table and/or INSERT, DELETE and UPDATE to modify one or more relations within the database.

Parent query operators may be understood in the context of an operator tree (i.e. a query execution plan or query plan) generated by a query optimizer. The term "query plan" as used herein may refer to an ordered set of steps executed by a DBMS to access or modify one or more data items within the database. Query optimizers may be, without limitation, cost-based or syntax-based.

A cost-based optimizer according to the present disclosure may estimate the cost (e.g., total elapsed time for answering a query) of a query by considering all possible combinations of query operators of a query which provide the same result and determining what combination of operators answer the query in the least amount of time. Cost based optimizers may estimate these costs by tracking the number of disk blocks to read, CPU usage and/or the network communications.

Syntax-based optimizers according to the present disclosure may create query plans for answering a query based on the exact syntax of the query and the order of the clauses within the query. The query optimizer may be part of a query processer in the DBMS.

For example, in the SQL query

```
       select * from A join B on A.a=B.b
```

the parent operator of "join" could be "project" (e.g. the SQL query above could be implemented using the PROJECT query operator).

Finally, in the fourth step 220, the <rs_rid, col_rid> pair may be placed into an intermediate result buffer 222 (also referred to as a result table). The corresponding rs_rid with vid is found while scanning the matched docids. Used columns of joined records (i.e. values of the column store records matching the join condition) may be materialized (i.e. projected). The intermediate result buffer 222 may match row store row identifiers (rs_rid) with identifiers of rows from the projected columns table (col_rids).

The contents of the intermediate result buffer 222 may be consumed by the parent operator of the JOIN, e.g. the PROJECT operator.

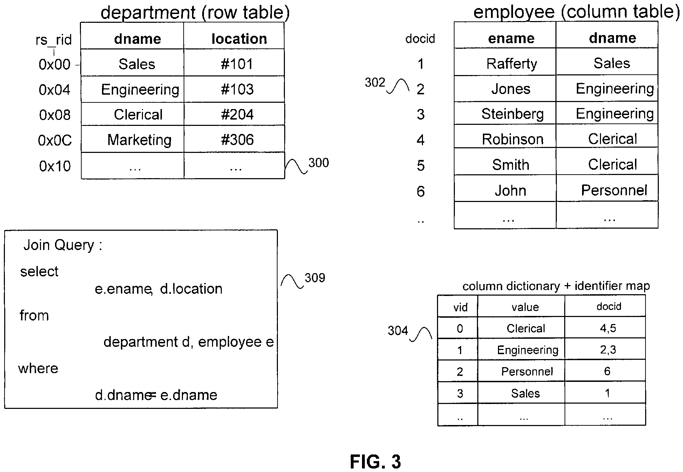

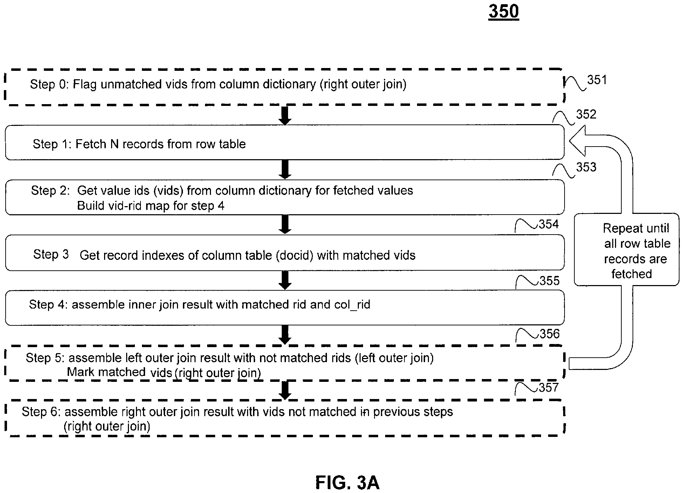

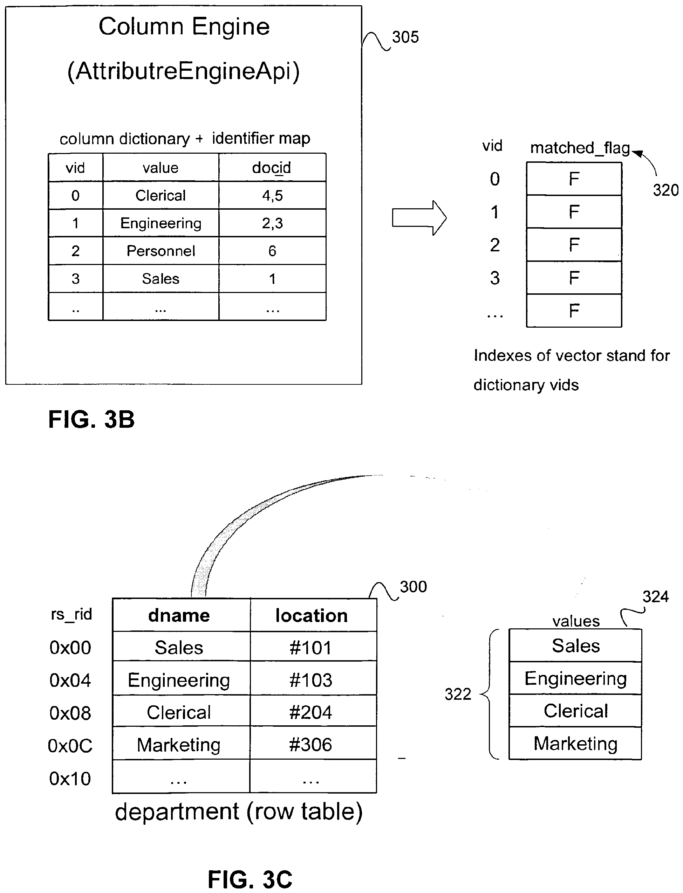

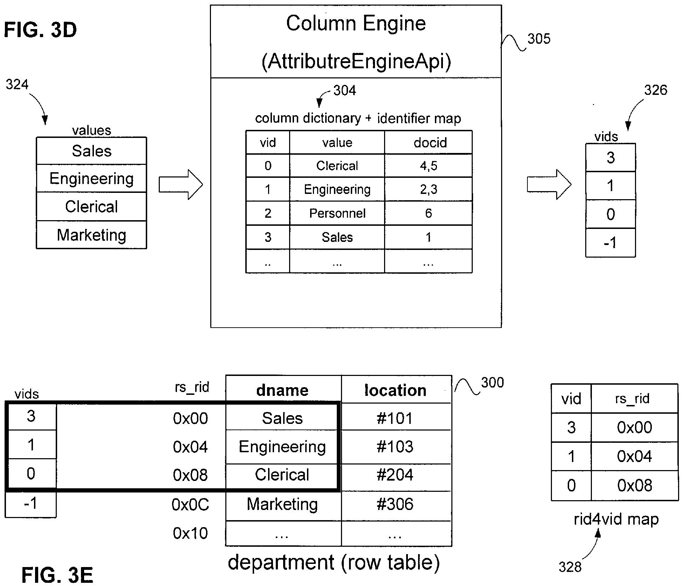

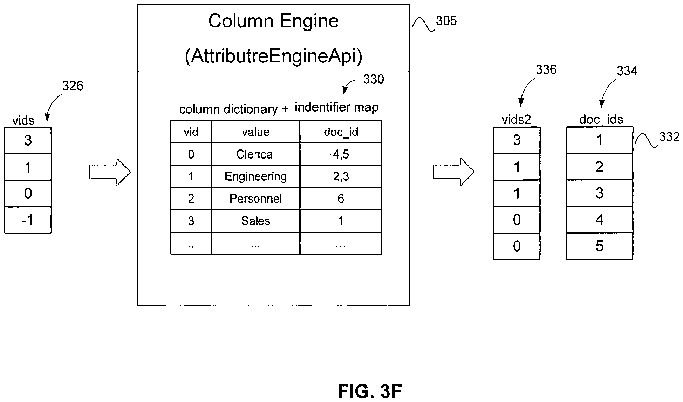

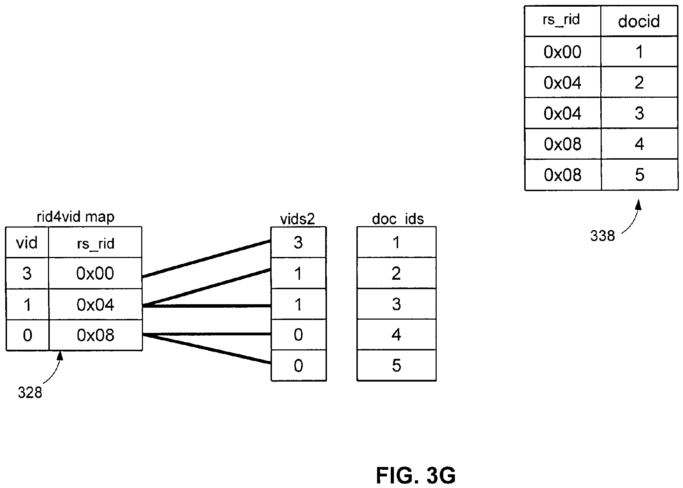

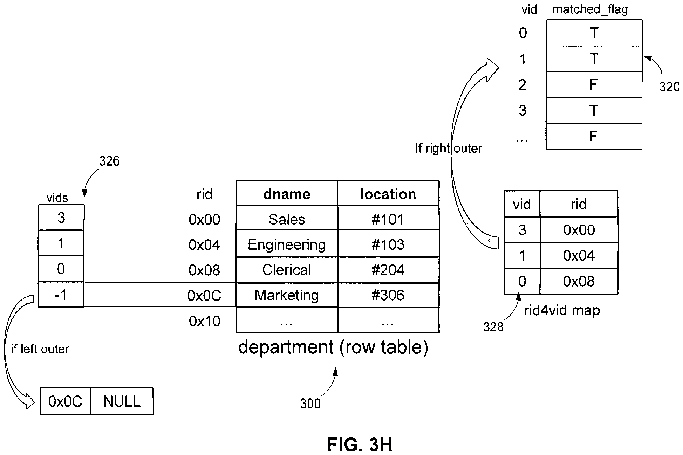

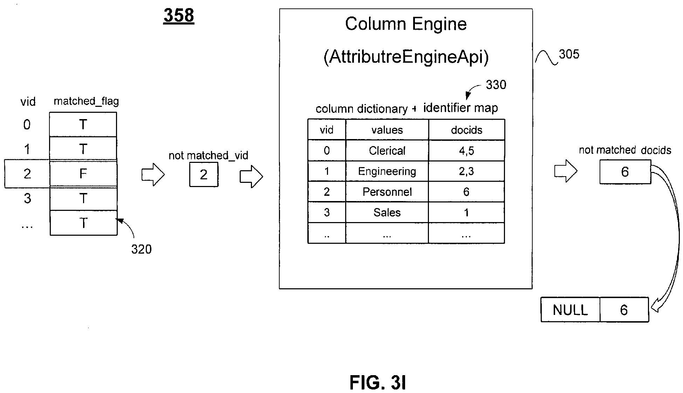

Figures 3-3I are simplified diagrams illustrating an example of the use of a mixed join operation in the specific context of a company directory. In particular, as shown in Figure 3 information stored in the database comprises department names (dname), department locations (locations), and employee names (ename).

Department name and department location are stored as columns in a row store table 300. Each row of the row table may be designated with a row store identifier (also referred to as a row identifier or rs_rid). Thus, each row store identifier uniquely identifies a row in the row store table.

Employee name (ename) and department (dname) are stored as columns in a column store table 302. Each row of the column table may be designated with a document identifier (also referred to as a column store record index or doc_id). Thus, in the context of a specific column, each docid (column store record index) refers to a cell in the column.

Also stored as part of the column table is a column dictionary 304 for a first column. In some cases, there may be a column dictionary for each column in the column store table. The column dictionary 304 includes mapping between distinct values in the column and value ids (vids) for each distinct value.

The identifier map 216 (also referred to as an inverted index) is an optional structure containing record identifiers (doc_ids) for each value identifier (vid). The identifier map 216 may be used to rapidly lookup the doc_ids corresponding to a given vid. For example, there may be an entry in the identifier map 216 for each vid, and the entry may include all docids of column store records entries with the vid.

In the event that an identifier map does not exist, the doc_ids can be retrieved by scanning a whole column and finding doc_ids matching a given vid. In other words, every entry in the column store record referred to by the second join column is evaluated in order to determine if the entry contains the vid. The column store record identifiers of the entries containing the vid are then returned.

To the database just described, a query may be posed by a user requesting identification of the location of employees. Responding to this query requires joining the row store table with the column store table. In particular, a join query 309 of the following form may be used:

```
       SELECT e.ename, d.location
       FROM department d, employee e
       WHERE d.dname = e.dname
```

Figure 3A is a simplified chart listing steps 351-357 of process flow 350 involved in performing the mixed join for this query. In a preliminary step 351 shown in Figure 3B, the value ids of the column dictionary 304 (vids, also depicted in Figure 2) are retrieved using the column engine 305. An output of this preliminary step (particularly in the case where the query specifies a right outer join) may be a matched_flag vector 320 (possibly implemented as an array or list) of boolean values whose indexes are (i.e. stand for) dictionary vids. Although the values depicted in the matched_flag vector 320 are "F" values (as in false, with corresponding "T" values representing true), other boolean value representations (e.g. 0 and 1) may also be used.

An example of the first step 352 is shown in Figure 3C. In this step, records are fetched (i.e. extracted or copied) from the row table 300. The records may be filtered according to the join condition (e.g. only values in the join columns of the records remain after filtering), resulting in filtered records 322. A string values array 324 may be constructed from the filtered records 322.

In a next step 353 shown in Figure 3D, the string values array 324 is input to the column engine 305, and the column dictionary is accessed to get the corresponding column store value identifier (vid), which is an integer in this example. The integer vids array 326 of column store value identifiers is output. The vids array 326 may include values indicating that there is a value in the string values array 324 with no matching value in the column dictionary. Here, a vid of -1 indicates that there is no matching value in column dictionary. -1 is an example of an invalid column entry (i.e. an invalid value identifier). Other invalid column entries are also envisioned.

As shown in Figure 3E, an intermediate map is constructed, similar to the intermediate map 212. The intermediate map may be referred to as a rip4vid map 328. Thus, the rip4vid map 328 may have the same function (i.e. use) as the intermediate map 212. In particular, the vids array 326 is matched with a corresponding rs_rid from the row table. The rid4vid map 328 is built, which can be used to find the rs_rid based upon the vid input. Thus, the intermediate map (i.e. the rid4vid map 328) may map column store value identifiers (vids) to row store row identifiers (rs_rids).

In the next step 354 shown in Figure 3F, the corresponding doc_ids array is created. Specifically, the integer vids array 326 is input to the column engine 305 to search an identifier map 330 to obtain the column store record identifier (doc_id) 332. The column store record indexes (integer doc_ids array 334 in this example) along with a corresponding set of value identifiers (vids2 array 336 in this example) may be output.

In the next step 355 shown in Figure 3G, the inner join result is assembled. This involves scanning the vids2 array 336 having the corresponding doc_id. The rid4vid map 328 is accessed to find the rs_rid. The rs_rid is then matched with the doc_ids to form an inner join result 338. The inner join result 338 may then be used to access values of the column store record referenced by the docids in order to obtain values of the column store record matching the join condition. The matching values may be materialized in a projected column (i.e. a materialized column). An identifier of a row of the projected column (col_rid) may be matched with a corresponding row store row identifier (rs_rid). Each rs_rid from the row store table may be matched with a row of a projected column from the column store table according to the join condition in order to form the result table. Each projected column may include a subset of the values in a column store record (e.g. the first column store record), in particular, values of the column store record matching the join condition.

A projected column may comprise entries from a column store record, in particular, the projected column may comprise entries from the column store record that match values from the row store record according to the join condition. Put another way, the projected column may comprise the entries of the first column store record that match the join condition.

The next step 357 comprises outer join handling as shown in Figure 3H. If a left outer join is specified in the query, then the vids array 326 is compared to the row table 300 to return the rs_rid whose matching vid is -1, indicating null column value. -1 is an example of an invalid column entry. If a right outer join is specified in the query, then a matched_flag vector (similar to the matched flag vector 320) may be created and vids matching the join condition (e.g. vids with an integer value other than "-1") may be identified in the matched_flag vector. Value identifiers (vids) matching the join condition may also be referred to as valid vids. Value identifiers not matching the join condition may be referred to as invalid vids.

In the final step 358 (shown in Figure 3I), when the right outer join is specified, the vids mapped to a matched_flag boolean value indicating false ("F") are identified in the matched_flag vector. Column store row identifiers in an index without a matched vid, are searched with the column engine. doc_ids that are not matched are returned with null row table value. In the particular embodiment illustrated in Fig 3I, vid 2 is the unmatched vid and doc_id 6 is found as unmatched (not matched) doc_id by the column engine.

For example, in the context of the right outer join, the first join column may reference a column of the row store table and the column store value identifiers match a value in the column of the row store table referenced by the first join column. Continuing the example, the boolean value of a value identifier is mapped to a value of true ("T") in the matched_flag when the column store value mapped to the value identifier in the column dictionary matches a row store value according to the join condition; accordingly, the boolean value of the value identifier is mapped to a value of false ("F") in the matched_flag when there is no row store value that matches (according to the join condition) the column store value mapped to the value identifier in the column dictionary.

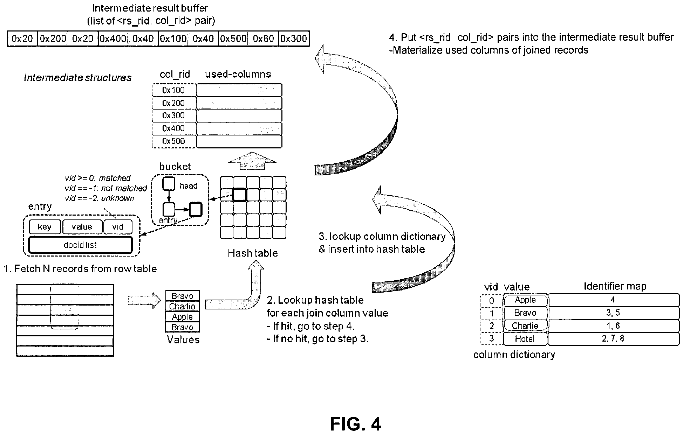

The result of a mixed join operator is an array comprising pairs of rs_rid (referring to the row table) and col_rid (referring to values from the column table). It is drawn as "Intermediate result buffer" in Figure 2 and Figure 4 (discussed below).

The pairs of rs_rid and col_rid are consumed by parent query operators of the mixed join. With a rs_rid or col_rid (record identifier), a column value of a record (in row or column table) can be accessed by parent query operators.

To summarize, embodiments of the native mixed join algorithm may directly access values of both row and column store data by iterating row store data and referencing the column dictionary. Embodiments of the native mixed join algorithm may allow join over row and column store data without any format conversion overhead. For each scanned value from row store data, the native mixed join can obtain the list of matched records in column store data by: looking up column dictionary with the scanned value, getting a vid as the dictionary search result, and retrieving doc_ids from the identifier map 330 or column engine with the found vid. In other words, in a join condition relating to a row store join column (i.e. a join column of the row store table) and a column store join column (i.e. a join column of the column store table), for each value in the row store join column, a search for the value in the column dictionary of the column store join column is performed in order to find the value identifiers corresponding to that value which are stored in the column store table. Thus, the native mixed join can take place utilizing row and column store data in its native form, by directly accessing values from both row and column store and returning matching pairs of rs_rid and col_rid.

While the preceding example focused upon a foreign-key join (1-to-N join), other types of mixed join can be performed according to various embodiments. An example of another type of mixed join is the N-to-M join. "N" refers to an arbitrary number of rows from a row store table and "M" refers to an arbitrary number of rows from a column store table. The N-to-M join may be understood as a join in which there are no foreign key (FK) constraints.

For an N-to-M join, there can be duplicate values in a join column of the row table. The execution steps of N-to-M mixed join are similar to those of the foreign key join. Thus, unless otherwise indicated, the N-to-M mixed join algorithm may carried out as described above with respect to figures 2 and 3.

The N-to-M join differs from the FK join in that a hash table may be used to enhance performance and incremental hash table management may be performed. In other words, as an optimization, the hash table may be maintained for fetched values from the row table, so as to avoid looking up the same value in the column dictionary more than once. The hash table may be implemented using a conventional hash function to determine hash table indexes (e.g. a function providing uniform distribution of hash values such as a cryptographic hash function).

**Figure 4** shows an overview of an N-to-M mixed join algorithm according to an embodiment. A key (i.e. an identifying value) of the hash table is a value from the row table, and an entry of hash table is <key (sometimes referred to as an index or hash value, and referring to the output of the hash function given the value from the row table as input), value (i.e. the value from the row table), value-id from column dictionary (value identifier from the column dictionary corresponding to the row table value), docids of a join column of the column store table (identifiers of rows in the column store table that include the row table value)>. For example, the row table value "apple" may be a key in the hash table. The hash table entry corresponding to the key "apple" could include the following:
key: 0x1234 (output of the hash function given "apple" as input)
value: "apple" (value from the row used as the key to the entry)
vid: 3 (value identifier of the column dictionary for "apple")
docid list: 4,8,9 (indexes of the column store record that include the value "apple").

Again, in a first step 1. N records are fetched from a row table. Before looking up the column dictionary, in step 2. the hash table is consulted to check whether the row table value was already registered beforehand. If hash table entry is returned, then the join result (<rs_rid, col_rid> pair list) is generated with an entry value.

If the row table value is not in the hash table yet, then the column dictionary is accessed in step 3. An entry is inserted into the hash table, and the result is returned.

In step 4., the <rs_rid, col_rid> pair is placed into the intermediate result buffer 222. Used columns of joined records (docids), are materialized as discussed in the context of Figures 2 and 3.

Embodiments of the new mixed join algorithm support pipelined execution so that steps 1-4 can be repeated, until all the row data is consumed by the join algorithm. In pipelined execution, the join result is incrementally consumed by users, and there would be a time gap between consecutive fetches.

The above description has focused upon embodiments wherein the identifier map is available to perform the mixed join. However, the identifier map is not required, and alternative embodiments could carry out a mixed join in the absence of the identifier map.

**Figure 8** shows a simplified physical representation of a column in a dictionary-encoded column table. A column (i.e. a column store record) is a vector (or array) of value identifiers (vids) and a column store record index (doc_id) is index of the array.

If the identifier map 330 does not exist, then doc_ids can be retrieved by scanning the vid vector (i.e. the column). For example, in this particular embodiment the doc_ids corresponding to vid 1 is {1, 4}. As scanning-based doc_id retrieval may in general be more expensive than identifier map access, the query optimizer may prefer to choose an algorithm utilizing an identifier map if one exists.

### Example

The performance of the conversion-free mixed join algorithm was evaluated by conducting an experiment for the TPC-H SF10 based dataset varying row table size. In this example, the identifier map was available to perform a foreign key mixed join algorithm.

In particular, the following query was posed to the dataset, allowing performance of join between the customer table and the orders table to be measured.

```
       SELECT count (*)
       FROM customer, orders
       WHERE c_custkey = o_custkey
```

The orders table was a column store table, and its cardinality was 15M. The customer table was a row store table and its initial cardinality was 1.5M. The table cardinality ratio (row table cardinality/column table cardinality) was changed from 0.1 to 0.01 by changing row table cardinality.

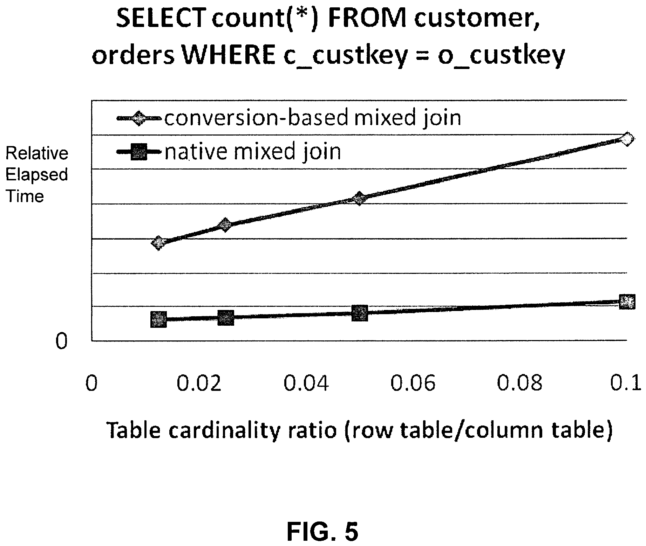

**Figure 5** plots relative elapsed time versus table cardinality ratio. The graph plotted in Figure 5 shows that the native mixed join outperforms existing conversion-based mixed join. In addition to offering this performance benefit, implementation of the native mixed join according to certain embodiments consumes less memory by allowing execution in a pipelined manner.

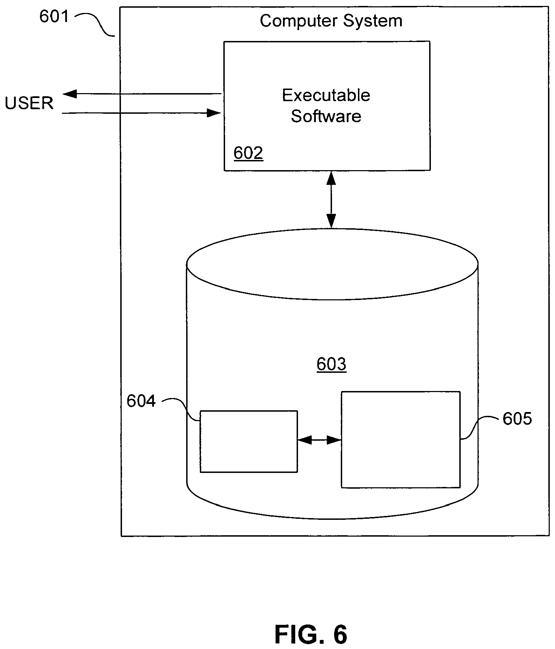

**Figure 6** illustrates hardware of a special purpose computing machine which may be configured to implement a native mixed join of database tables according to certain embodiments.

In particular, computer system 600 comprises a processor 602 that is in electronic communication with a non-transitory computer-readable storage medium 603. This computer-readable storage medium has stored thereon code 605 corresponding to the column engine. Code 604 corresponds to a column dictionary stored in a database of a non-transitory computer-readable storage medium, which may be referenced to perform the mixed join as has been described above.

The apparatuses, methods, and techniques described herein may be implemented as a computer program (software) executing on one or more computers. The computer program may further be stored on a non-transitory computer readable medium. The non-transitory computer readable medium may include instructions for performing the processes described.

The computer system may comprise a software server. A number of software servers together may form a cluster, or logical network of computer systems programmed with software programs that communicate with each other and work together to process requests.

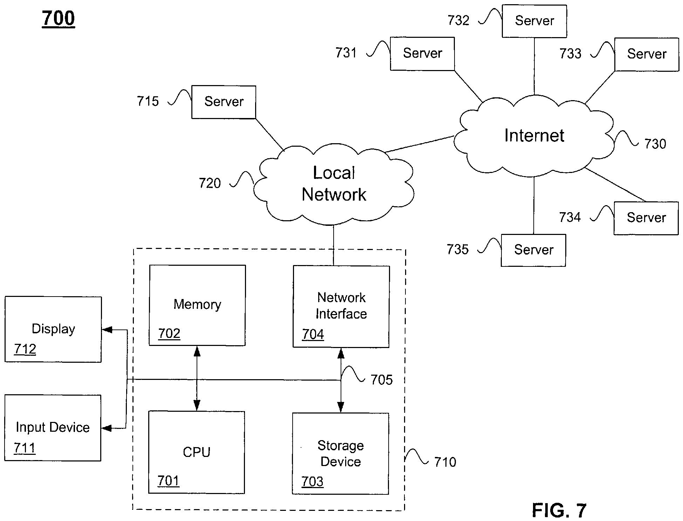

An example computer system 710 is illustrated in **Figure 7****.** Computer system 710 includes a bus 705 or other communication mechanism for communicating information, and a processor 701 coupled with bus 705 for processing information.

Computer system 710 also includes a memory 702 coupled to bus 705 for storing information and instructions to be executed by processor 701, including information and instructions for performing the techniques described above, for example. This memory may also be used for storing variables or other intermediate information during execution of instructions to be executed by processor 701. Possible implementations of this memory may be, but are not limited to, random access memory (RAM), read only memory (ROM), or both.

A storage device 703 is also provided for storing information and instructions. Common forms of storage devices include, for example, a hard drive, a magnetic disk, an optical disk, a CD-ROM, a DVD, a flash memory, a USB memory card, or any other medium from which a computer can read.

Storage device 703 may include source code, binary code, or software files for performing the techniques above, for example. Storage device and memory are both examples of computer readable media.

Computer system 710 may be coupled via bus 705 to a display 712, such as a cathode ray tube (CRT) or liquid crystal display (LCD), for displaying information to a computer user. An input device 711 such as a keyboard and/or mouse is coupled to bus 705 for communicating information and command selections from the user to processor 701. The combination of these components allows the user to communicate with the system. In some systems, bus 705 may be divided into multiple specialized buses.

Computer system 710 also includes a network interface 704 coupled with bus 705. Network interface 704 may provide two-way data communication between computer system 710 and the local network 720. The network interface 704 may be a digital subscriber line (DSL) or a modem to provide data communication connection over a telephone line, for example. Another example of the network interface is a local area network (LAN) card to provide a data communication connection to a compatible LAN. Wireless links are another example. In any such implementation, network interface 704 sends and receives electrical, electromagnetic, or optical signals that carry digital data streams representing various types of information.

Computer system 710 can send and receive information, including messages or other interface actions, through the network interface 704 across a local network 720, an Intranet, or the Internet 730. For a local network, computer system 710 may communicate with a plurality of other computer machines, such as server 715. Accordingly, computer system 710 and server computer systems represented by server 715 may form a cloud computing network, which may be programmed with processes described herein.

In an example involving the Internet, software components or services may reside on multiple different computer systems 710 or servers 731-735 across the network. The processes described above may be implemented on one or more servers, for example. A server 731 may transmit actions or messages from one component, through Internet 730, local network 720, and network interface 704 to a component on computer system 710. The software components and processes described above may be implemented on any computer system and send and/or receive information across a network, for example.

## Claims

1. A computer implemented method for processing a database query, the database comprising a row store table stored according to the row-oriented storage model by storing rows as row store records and a column store table stored according to the column-oriented storage model by storing columns as column store records,
wherein row store records and column store records consist of multiple cells, and
wherein a cell in the row store table includes a value, and a cell in the column store table includes an entry, the entry comprising a column store value identifier which may be used with a column dictionary (210, 304) mapping column store values to column store value identifiers to determine a column store value corresponding to the column store value identifier;
the method comprising
determining that the query specifies a join condition comprising a first join column of the row store table and a second join column of the column store table;
extracting (202) row store records from the row store table, the row store records including the first join column;
extracting a set of values (205) in the first join column;
referencing a column dictionary corresponding to the column of the second join column (210, 304) to determine column store value identifiers for each value in the set of values (205) by searching the column dictionary (210, 304) for each value in the set of values (205) according to the join condition;
referencing an identifier map included in the column dictionary (216) to obtain document identifiers of the second join column of the column store table from the column store value identifiers, the document identifiers being indexes into a column store record referenced by the second join column of the column table, and referring to rows of the column store table;
copying columns of column table records of values matching the join condition and providing a table including cells of the copied columns and identifiers to the rows of the copied columns; and
providing (220) a result table (222) by placing pairs of row store record identifiers and identifiers to the rows of the copied columns into an intermediate result buffer.

2. The method of claim 1, further comprising:
creating an intermediate map (212, 328) mapping the row store record identifier to the column store entry;
wherein providing the row store record identifiers and the identifiers to the rows of the copied columns comprises:
accessing the intermediate map (212, 328) to obtain the row store record identifiers; and
matching the row store record identifiers with the identifiers to the rows of the copied columns.

3. The method of any one of claims 1 or 2, wherein copying further comprises:
scanning the column store record to determine a column store record index that identifies a location of the column store entry in the column store record.

4. The method of claim 1, wherein the plurality of row store records includes a second row store record, the second row store record being identified by a second row store record identifier, the method further comprising:
determining that the query specifies a left outer join;
identifying a second row store value of the second row store record, the second row store value being in the first join column;
determining that the column dictionary (210,304) of the first column store record does not contain a second column store value that matches the second row store value according to the join condition;
processing (356) the result table (222) in order to create a left outer join table, the left outer join table including the second row store value and a corresponding NULL value, the corresponding NULL value indicating that the first column store record does not contain a second column store value that matches the second row store value according to the join condition.

5. The method of claim 4 in combination with claim 2,
wherein determining that the column dictionary (210,304) does not contain the second column store value comprises looking up a second value identifier corresponding to the second column store value in the intermediate map (212, 328), optionally by determining that the intermediate map (212, 328) includes an invalid column store entry mapped to the second row store record identifier.

6. The method of any one of claims 4 or 5, further comprising
- determining that the query specifies a right outer join;
- creating (356) a matched flag vector (320) mapping each column store value identifier to a corresponding boolean value, the boolean value indicating whether the column store value of the corresponding column store value identifier matches any row store value in the first join column;
- when a boolean value of the matched flag vector indicates that a third column store value identified by a third column store value identifier does not match any row store value in the first join column according to the join condition:
-- the method further comprises determining a third column store record index that identifies a location of the third column store entry in the first column store record, the third column store entry comprising the third column store value identifier, and
-- the copying further comprises copying the third column store entry in the copied column;
- processing (357) the result table (222) in order to create a right outer join table, the processing including inserting the third column store value and a corresponding NULL value into the right outer join table, the corresponding NULL value indicating that the third column store value does not match any row store value in the first join column according to the join condition.

7. The method of any one of the preceding claims, further comprising:
determining that the first join column has duplicate values;
maintaining a hash table mapping row store values with column store values, column store value identifiers and column store record indexes by means of a hash function, wherein determining the column store entry of the column store record further comprising inserting the following into the hash table:
the row store value, the row store value mapped to a first associated column data;
the first associated column data comprising:
a hash function output of the hash function when the hash function is given the row store value as input;
the row store value;
the column store value identifier; and
a first column store record index that identifies a location of the column store entry in the column store record;
wherein the plurality of row store records includes a third row store record, the third row store record being identified by a third row store record identifier, the method further comprising:
identifying a third row store value of the third row store record, the third row store value being in the first join column;
determining a third column store entry of the third column store record, the third column store entry comprising a third column store value identifier, wherein the third column store record has a corresponding column dictionary;
checking the hash table to determine if the third row store value is in the hash table;
when the third row store value is in the hash table, determining the third column store value identifier by accessing column data associated with the third row store value;
when the third row store value is not in the hash table, determining the third column store value identifier by referencing the column dictionary corresponding to the third column store record.

8. A computer program product comprising computer-readable instructions, which, when loaded and executed on a computer system, cause the computer system to perform operations according to the method of any one of the preceding claims.

9. A computer system for processing a query, the system configured to perform the method of any one of claims 1 to 7.

## Patentansprüche

1. Computerimplementiertes Verfahren zum Verarbeiten einer Datenbankabfrage, wobei die Datenbank eine gemäß dem zeilenorientierten Speichermodell gespeicherte Zeilenspeichertabelle durch Speichern von Zeilen als Zeilenspeicheraufzeichnungen und eine gemäß dem spaltenorientierten Speichermodell gespeicherte Spaltenspeichertabelle durch Speichern von Spalten als Spaltenspeicheraufzeichnungen umfasst,
wobei Zeilenspeicheraufzeichnungen und Spaltenspeicheraufzeichnungen aus mehreren Zellen bestehen und
wobei eine Zelle in der Zeilenspeichertabelle einen Wert enthält und eine Zelle in der Spaltenspeichertabelle einen Eintrag enthält, wobei der Eintrag eine Spaltenspeicherwertkennung umfasst, die mit einem Spaltenverzeichnis (210, 304) verwendet werden kann, das Spaltenspeicherwerte auf Spaltenspeicherwertkennungen mappt, um einen Spaltenspeicherwert zu bestimmen, der der Spaltenspeicherwertkennung entspricht;
wobei das Verfahren umfasst:
Bestimmen, dass die Abfrage eine Join-Bedingung spezifiziert, die eine erste Join-Spalte der Zeilenspeichertabelle und eine zweite Join-Spalte der Spaltenspeichertabelle umfasst;
Extrahieren (202) von Zeilenspeicheraufzeichnungen aus der Zeilenspeichertabelle, wobei die Zeilenspeicheraufzeichnungen die erste Join-Spalte enthalten;
Extrahieren eines Satzes von Werten (205) in der ersten Join-Spalte;
Referenzieren eines Spaltenverzeichnisses, das der Spalte der zweiten Join-Spalte (210, 304) entspricht, um Spaltenspeicherwertkennungen für jeden Wert in dem Satz von Werten (205) durch Durchsuchen des Spaltenverzeichnisses (210, 304) nach jedem Wert in dem Satz von Werten (205) gemäß der Join-Bedingung zu bestimmen;
Referenzieren einer Kennungskarte (216), die in dem Spaltenverzeichnis (216) enthalten ist, um Dokumentenkennungen der zweiten Join-Spalte der Spaltenspeichertabelle aus den Spaltenspeicherwertkennungen zu erhalten,
wobei die Dokumentkennungen Indizes in eine Spaltenspeicheraufzeichnung sind, die bzw. der durch die zweite Join-Spalte der Spaltentabelle referenziert wird, und Verweisen auf Zeilen der Spaltenspeichertabelle;
Kopieren von Spalten von Spaltentabellenaufzeichnungen von Werten, die mit der Join-Bedingung übereinstimmen, und Bereitstellen einer Tabelle, die Zellen der kopierten Spalten und Kennungen zu den Zeilen der kopierten Spalten enthält; und
Bereitstellen (220) einer Ergebnistabelle (222) durch Platzieren von Paaren von Zeilenspeicheraufzeichnungskennungen und Kennungen zu den Zeilen der kopierten Spalten in einen Zwischenergebnispuffer.

2. Verfahren nach Anspruch 1, ferner umfassend:
Erzeugen einer Zwischenkarte (212, 328), die die Zeilenspeicheraufzeichnungskennung auf den Spaltenspeichereintrag mappt;
wobei das Bereitstellen der Zeilenspeicheraufzeichnungskennungen und der Kennungen zu den Zeilen der kopierten Spalten umfasst:
Zugreifen auf die Zwischenkarte (212, 328), um die Zeilenspeicheraufzeichnungskennungen zu erhalten; und
Abgleichen der Zeilenspeicheraufzeichnungskennungen mit den Kennungen zu den Zeilen der kopierten Spalten.

3. Verfahren nach einem der Ansprüche 1 oder 2, wobei das Kopieren ferner umfasst:
Scannen der Spaltenspeicheraufzeichnung, um einen Spaltenspeicheraufzeichnungsindex zu bestimmen, der einen Ort des Spaltenspeichereintrags in der Spaltenspeicheraufzeichnung identifiziert.

4. Verfahren nach Anspruch 1, wobei die Mehrzahl von Zeilenspeicheraufzeichnungen eine zweite Zeilenspeicheraufzeichnung enthält, wobei die zweite Zeilenspeicheraufzeichnung durch eine zweite Zeilenspeicheraufzeichnungskennung identifiziert wird, wobei das Verfahren ferner umfasst:
Bestimmen, dass die Abfrage einen linken äußeren Join spezifiziert;
Identifizieren eines zweiten Zeilenspeicherwerts der zweiten Zeilenspeicheraufzeichnung, wobei der zweite Zeilenspeicherwert in der ersten Join-Spalte ist;
Bestimmen, dass das Spaltenverzeichnis (210, 304) der ersten Spaltenspeicheraufzeichnung keinen zweiten Spaltenspeicherwert enthält, der mit dem zweiten Zeilenspeicherwert gemäß der Join-Bedingung übereinstimmt;
Verarbeiten (356) der Ergebnistabelle (222), um eine linke äußere Join-Tabelle zu erzeugen, wobei die linke äußere Join-Tabelle den zweiten Zeilenspeicherwert und einen entsprechenden NULL-Wert enthält, wobei der entsprechende NULL-Wert angibt, dass die erste Spaltenspeicheraufzeichnung keinen zweiten Spaltenspeicherwert enthält, der mit dem zweiten Zeilenspeicherwert gemäß der Join-Bedingung übereinstimmt;

5. Verfahren nach Anspruch 4 in Kombination mit Anspruch 2,
wobei das Bestimmen, dass das Spaltenverzeichnis (210, 304) den zweiten Spaltenspeicherwert nicht enthält, das Nachschlagen einer zweiten Wertkennung, die dem zweiten Spaltenspeicherwert entspricht, in der Zwischenkarte (212, 328) umfasst, optional durch Bestimmen, dass die Zwischenkarte (212, 328) einen ungültigen Spaltenspeichereintrag enthält, der auf die zweite Zeilenspeicheraufzeichnungskennung gemappt wird.

6. Verfahren nach einem der Ansprüche 4 oder 5, ferner umfassend
- Bestimmen, dass die Abfrage einen rechten äußeren Join spezifiziert;
- Erzeugen (356) eines abgestimmten Flag-Vektors (320), der jede Spaltenspeicherwertkennung auf einen entsprechenden booleschen Wert mappt, wobei der boolesche Wert angibt, ob der Spaltenspeicherwert der entsprechenden Spaltenspeicherwertkennung mit einem Zeilenspeicherwert in der ersten Join-Spalte übereinstimmt;
- wenn ein boolescher Wert des abgestimmten Flag-Vektors angibt, dass ein dritter Spaltenspeicherwert, der durch eine dritte Spaltenspeicherwertkennung identifiziert wird, nicht mit einem Zeilenspeicherwert in der ersten Join-Spalte gemäß der Join-Bedingung übereinstimmt:
-- das Verfahren ferner das Bestimmen eines dritten Spaltenspeicheraufzeichnungsindex umfasst, der einen Ort des dritten Spaltenspeichereintrags in der ersten Spaltenspeicheraufzeichnung identifiziert, wobei der dritte Spaltenspeichereintrag die dritte Spaltenspeicherwertkennung umfasst, und
-- das Kopieren ferner das Kopieren des dritten Spaltenspeichereintrags in die kopierte Spalte umfasst;
- Verarbeiten (357) der Ergebnistabelle (222), um eine rechte äußere Join-Tabelle zu erzeugen, wobei das Verarbeiten das Einsetzen des dritten Spaltenspeicherwerts und eines entsprechenden NULL-Werts in die rechte äußere Join-Tabelle umfasst, wobei der entsprechende NULL-Wert angibt, dass der dritte Spaltenspeicherwert mit keinem Zeilenspeicherwert in der ersten Join-Spalte gemäß der Join-Bedingung übereinstimmt.

7. Verfahren nach einem der vorhergehenden Ansprüche, ferner umfassend:
Bestimmen, dass die erste Join-Spalte doppelte Werte aufweist;
Verwalten einer Hash-Tabelle, die Zeilenspeicherwerte mit Spaltenspeicherwerten, Spaltenspeicherwertkennungen und Spaltenspeicheraufzeichnungsindizes mittels einer Hash-Funktion mappt, wobei das Bestimmen des Spaltenspeichereintrags der Spaltenspeicheraufzeichnung ferner das Einsetzen des Folgenden in die Hash-Tabelle umfasst:
des Zeilenspeicherwerts, wobei der Zeilenspeicherwert auf erste verknüpfte Spaltendaten gemappt wird;
wobei die ersten verknüpften Spaltendaten umfassen:
eine Hash-Funktion-Ausgabe der Hash-Funktion, wenn der Hash-Funktion der Zeilenspeicherwert als Eingabe gegeben wird;
den Zeilenspeicherwert;
die Spaltenspeicherwertkennung; und
einen ersten Spaltenspeicheraufzeichnungsindex, der einen Ort des Spaltenspeichereintrags in der Spaltenspeicheraufzeichnung identifiziert;
wobei die Mehrzahl von Zeilenspeicheraufzeichnungen eine dritte Zeilenspeicheraufzeichnung enthält, wobei die dritte Zeilenspeicheraufzeichnung durch eine dritte Zeilenspeicheraufzeichnungskennung identifiziert wird, wobei das Verfahren ferner umfasst:
Identifizieren eines dritten Zeilenspeicherwerts der dritten Zeilenspeicheraufzeichnung, wobei der dritte Zeilenspeicherwert in der ersten Join-Spalte ist;
Bestimmen eines dritten Spaltenspeichereintrags der dritten Spaltenspeicheraufzeichnung, wobei der dritte Spaltenspeichereintrag eine dritten Spaltenspeicherwertkennung umfasst, wobei die dritte Spaltenspeicheraufzeichnung ein entsprechendes Spaltenverzeichnis aufweist;
Überprüfen der Hash-Tabelle, um zu bestimmen, ob der dritte Zeilenspeicherwert in der Hash-Tabelle ist;
wenn der dritte Zeilenspeicherwert in der Hash-Tabelle ist, Bestimmen der dritten Spaltenspeicherwertkennung durch Zugreifen auf Spaltendaten, die mit dem dritten Zeilenspeicherwert verknüpft sind;
wenn der dritte Zeilenspeicherwert nicht in der Hash-Tabelle ist, Bestimmen der dritten Spaltenspeicherwertkennung durch Referenzieren des Spaltenverzeichnisses, das der dritten Spaltenspeicheraufzeichnung entspricht.

8. Computerprogrammprodukt umfassend computerlesbare Anweisungen, die, wenn auf einem Computersystem geladen und ausgeführt, das Computersystem veranlassen, Operationen gemäß dem Verfahren nach einem der vorhergehenden Ansprüche auszuführen.

9. Computersystem zum Verarbeiten einer Abfrage, wobei das System konfiguriert ist, das Verfahren nach einem der Ansprüche 1 bis 7 durchzuführen.

## Revendications

1. Procédé mis en oeuvre par ordinateur pour traiter une requête de base de données, la base de données comprenant une table de stockage de rangées stockée en fonction du modèle de stockage orienté rangées en stockant des rangées comme enregistrements de stockage de rangées et une table de stockage de colonnes stockée en fonction du modèle de stockage orienté colonnes en stockant des colonnes comme enregistrements de stockage de colonnes,
dans lequel des enregistrements de stockage de rangées et des enregistrements de stockage de colonne sont constitués de multiples cellules, et
dans lequel une cellule dans la table de stockage de rangées inclut une valeur et une cellule dans la table de stockage de colonnes inclut une entrée, l'entrée comprenant un identifiant de valeur de stockage de colonne qui peut être utilisé avec un dictionnaire de colonnes (210, 304) mappant des valeurs de stockage de colonne à des identifiants de valeur de stockage de colonne pour déterminer une valeur de stockage de colonne correspondant à l'identifiant de valeur de stockage de colonne ;
le procédé comprenant
déterminer que la requête spécifie une condition de jointure comprenant une première colonne de jointure de la table de stockage de rangées et une seconde colonne de jointure de la table de stockage de colonnes ;
extraire (202) des enregistrements de stockage de rangées de la table de stockage de rangées, les enregistrements de stockage de rangées incluant la première colonne de jointure ;
extraire un ensemble de valeurs (205) dans la première colonne de jointure ;
référencer un dictionnaire de colonnes correspondant à la colonne de la seconde colonne de jointure (210, 304) pour déterminer des identifiants de valeur de stockage de colonne pour chaque valeur dans l'ensemble de valeurs (205) en effectuant une recherche dans le dictionnaire de colonnes (210, 304) pour chaque valeur dans l'ensemble de valeurs (205) en fonction de la condition de jointure ;
référencer une carte d'identifiants inclus dans le dictionnaire de colonnes (216) pour obtenir des identifiants de document de la seconde colonne de jointure de la table de stockage de colonnes à partir des identifiants de valeur de stockage de colonne, les identifiants de document étant des indices dans un enregistrement de stockage de colonnes référencé par la seconde colonne de jointure de la table de colonnes et se référant à des rangées de la table de stockage de colonnes ;
copier des colonnes d'enregistrements de table de colonnes de valeurs correspondant à la condition de jointure et fournir une table incluant des cellules des colonnes copiées et identifiants aux rangées des colonnes copiées ; et
fournir (220) une table de résultats (222) en plaçant des paires d'identifiants d'enregistrement de stockage de rangées et d'identifiants aux rangées des colonnes copiées à un tampon de résultats intermédiaire.

2. Procédé selon la revendication 1, comprenant en outre :
créer une carte intermédiaire (212, 328) mappant l'identifiant d'enregistrement de stockage de rangées à l'entrée de stockage de colonnes ;
dans lequel fournir les identifiants d'enregistrement de stockage de rangées et les identifiants aux rangées des colonnes copiées comprend :
accéder à la carte intermédiaire (212, 328) pour obtenir les identifiants d'enregistrement de stockage de rangées ; et
faire correspondre les identifiants d'enregistrement de stockage de rangées aux identifiants aux rangées des colonnes copiées.

3. Procédé selon l'une quelconque des revendications 1 ou 2, dans lequel copier comprend en outre :
balayer l'enregistrement de stockage de colonnes pour déterminer un indice d'enregistrement de stockage de colonnes qui identifie un emplacement de l'entrée de stockage de colonnes dans l'enregistrement de stockage de colonnes.

4. Procédé selon la revendication 1, dans lequel la pluralité d'enregistrements de stockage de rangées inclut un deuxième enregistrement de stockage de rangées, le deuxième enregistrement de stockage de rangées étant identifié par un deuxième identifiant d'enregistrement de stockage de rangées, le procédé comprenant en outre :
déterminer que la requête spécifie une jointure externe gauche ;
identifier une deuxième valeur de stockage de rangée du deuxième enregistrement de stockage de rangées, la deuxième valeur de stockage de rangée étant dans la première colonne de jointure ;
déterminer que le dictionnaire de colonnes (210, 304) du premier enregistrement de stockage de colonnes ne contient pas de deuxième valeur de stockage de colonne qui correspond à la deuxième valeur de stockage de rangée en fonction de la condition de jointure ;
traiter (356) la table de résultats (222) afin de créer une table de jointure externe gauche, la table de jointure externe gauche incluant la deuxième valeur de stockage de rangée et une valeur ZERO correspondante, la valeur ZERO correspondante indiquant que le premier enregistrement de stockage de colonnes ne contient pas de deuxième valeur de stockage de colonne qui correspond à la deuxième valeur de stockage de rangée en fonction de la condition de jointure.

5. Procédé selon la revendication 4 en combinaison avec la revendication 2,
dans lequel déterminer que le dictionnaire de colonnes (210, 304) ne contient pas la deuxième valeur de stockage de colonne comprend consulter un deuxième identifiant de valeur correspondant à la deuxième valeur de stockage de colonne dans la carte intermédiaire (212, 328), en déterminant en option que la carte intermédiaire (212, 328) inclut une entrée de stockage de colonnes invalide mappée au deuxième identifiant d'enregistrement de stockage de rangées.

6. Procédé selon l'une quelconque des revendications 4 ou 5, comprenant en outre
- déterminer que la requête spécifie une jointure externe droite ;
- créer (356) un vecteur de drapeau apparié (320) mappant chaque identifiant de valeur de stockage de colonne à une valeur booléenne correspondante, la valeur booléenne indiquant si la valeur de stockage de colonne de l'identifiant de valeur de stockage de colonne correspondant correspond à une valeur de stockage de rangée quelconque dans la première colonne de jointure ;
- lorsqu'une valeur booléenne du vecteur de drapeau apparié indique qu'une troisième valeur de stockage de colonne identifiée par un troisième identifiant de valeur de stockage de colonne ne correspond pas à une valeur de stockage de rangée quelconque dans la première colonne de jointure en fonction de la condition de jointure :
-- le procédé comprend en outre déterminer un troisième indice d'enregistrement de stockage de colonnes qui identifie un emplacement de la troisième entrée de stockage de colonnes dans le premier enregistrement de stockage de colonnes, la troisième entrée de stockage de colonnes comprenant le troisième identifiant de valeur de stockage de colonne, et
-- le fait de copier comprend en outre copier la troisième entrée de stockage de colonnes dans la colonne copiée ;
- traiter (357) la table de résultats (222) afin de créer une table de jointure externe droite, le traitement incluant insérer la troisième valeur de stockage de colonne et une valeur ZERO correspondante dans la table de jointure externe droite, la valeur ZERO correspondante indiquant que la troisième valeur de stockage de colonne ne correspond pas à une valeur de stockage de rangée quelconque dans la première colonne de jointure en fonction de la condition de jointure.

7. Procédé selon l'une quelconque des revendications précédentes, comprenant en outre :
déterminer que la première colonne de jointure a des valeurs en double ;
maintenir une table de hachage mappant des valeurs de stockage de rangée avec des valeurs de stockage de colonne, des identifiants de valeur de stockage de colonne et des indices d'enregistrement de stockage de colonnes au moyen d'une fonction de hachage, dans lequel déterminer l'entrée de stockage de colonnes de l'enregistrement de stockage de colonnes comprenant en outre insérer ce qui suit dans la table de hachage :
la valeur de stockage de rangée, la valeur de stockage de rangée mappée à des premières données de colonne associées ;
les premières données de colonne associées comprenant :
une sortie de fonction de hachage de la fonction de hachage lorsque la fonction de hachage est attribuée la valeur de stockage de rangée comme entrée ;
la valeur de stockage de rangée ;
l'identifiant de valeur de stockage de colonne ; et
un premier indice d'enregistrement de stockage de colonnes qui identifie un emplacement de l'entrée de stockage de colonnes dans l'enregistrement de stockage de colonnes ;
dans lequel la pluralité d'enregistrements de stockage de rangées inclut un troisième enregistrement de stockage de rangées, le troisième enregistrement de stockage de rangées étant identifié par un troisième identifiant d'enregistrement de stockage de rangées, le procédé comprenant en outre :
identifier une troisième valeur de stockage de rangée du troisième enregistrement de stockage de rangées, la troisième valeur de stockage de rangée étant dans la première colonne de jointure ;
déterminer une troisième entrée de stockage de colonne du troisième enregistrement de stockage de colonnes, la troisième entrée de stockage de colonne comprenant un troisième identifiant de valeur de stockage de colonne,
dans lequel le troisième enregistrement de stockage de colonnes a un dictionnaire de colonnes correspondant ;
vérifier la table de hachage pour déterminer si la troisième valeur de stockage de rangée est dans la table de hachage ;
lorsque la troisième valeur de stockage de rangée est dans la table de hachage, déterminer le troisième identifiant de valeur de stockage de colonne en accédant à des données de colonne associées à la troisième valeur de stockage de rangée ;
lorsque la troisième valeur de stockage de rangée n'est pas dans la table de hachage, déterminer le troisième identifiant de valeur de stockage de colonne en référençant le dictionnaire de colonnes correspondant au troisième enregistrement de stockage de colonnes.

8. Produit de programme informatique comprenant des instructions lisibles par ordinateur qui, lors de leur chargement et exécution sur un système informatique, amènent le système informatique à réaliser des opérations conformément au procédé selon l'une quelconque des revendications précédentes.

9. Système informatique pour traiter une requête, le système étant configuré pour réaliser le procédé selon l'une quelconque des revendications 1 à 7.
